Europäisches Patentamt

European Patent Office

Office européen des brevets

(19)

(11) Publication number: **0 140 549**
**B1**

(12) **EUROPEAN PATENT SPECIFICATION**

(45) Date of publication of patent specification: **27.04.88**

(51) Int. Cl.⁴: **F 16 D 65/20**

(21) Application number: **84306155.7**

(22) Date of filing: **10.09.84**

(54) Disc brake retraction device.

(30) Priority: **14.09.83 GB 8324556**

(43) Date of publication of application:
**08.05.85 Bulletin 85/19**

(45) Publication of the grant of the patent:
**27.04.88 Bulletin 88/17**

(84) Designated Contracting States:
**DE FR GB IT SE**

(56) References cited:
**GB-A-1 602 068**
**GB-A-2 036 898**
**GB-A-2 097 876**

(73) Proprietor: **FORD MOTOR COMPANY LIMITED
Eagle Way
Brentwood Essex CM13 3BW (GB)**
(84) **GB IT SE**

(73) Proprietor: **FORD-WERKE
AKTIENGESELLSCHAFT
Ottoplatz 2 Postfach 21 03 69
D-5000 Köln 21 (DE)**
(84) **DE**

(73) Proprietor: **FORD FRANCE SOCIETE ANONYME
344 Avenue Napoléon Bonaparte B.P. 307
F-92506 Rueil Malmaison Cedex (FR)**
(84) **FR**

(72) Inventor: **Stace, Richard John Leslie
15 Willingale Way
Thorpe Bay Essex (GB)**

(74) Representative: **Messulam, Alec Moses et al
A. Messulam & Co. 24 Broadway
Leigh on Sea Essex SS9 1BN (GB)**

Courier Press, Leamington Spa, England.

## Description

This invention relates to disc brakes and is particularly suitable for application to motor vehicle disc brakes.

Disc braking systems currently in use in motor vehicles include a calliper with a piston working in a cylinder and arranged to urge a brake pad into pressure contact with a brake disc when hydraulic fluid is supplied to the cylinder. There is usually no return device for displacing the brake pad from the brake disc after a brake application and the brake pad remains held in contact with the disc by friction in the hydraulic actuating system unless urged back by run out of the disc or by vibration of the calliper relative to the disc.

It is found that the frictional drag between brake pad and disc when the brakes are not actuated gives rise to an increase of average fuel consumption of the order of one per cent. In city driving on smooth roads and at relatively low speeds the percentage increase is higher.

There have earlier been proposed means for positive retraction of the brake pad, examples of these being described in GB—A—2,097,876 and GB—A—2,036,898. Such prior solutions have resulted in an imprecise amount of retraction and this in turn caused variation in the amount of pedal movement required from one actuation to the next and different amounts of play in the pads of the different wheels.

The present invention seeks to mitigate the above disadvantages and to permit a precise retraction of the brake pad following each actuation.

GB—A—1602068 discloses a pressure medium operable disc brake having an annular piston and cylinder assembly operable to actuate and release the brake and an expansible wear-compensating device for transmitting movement of one of said members to the brake lining carrier of the disc brake. The expansible wear compensating device in use compensating automatically upon brake, actuation and release, for lengthening of the mechanism as a result of the brake lining wear. The compensating device comprises two adjustment rings urged into mutual contact across inclined surfaces or planes arranged such that relative rotation of the rings alters the axial length occupied by the rings, and resilient means biasing the rings for relative rotation in one direction to increase the axial length, the brake being provided with means for rotating the rings relative to one another in the opposite direction against the force of said means to an extent sufficient to ensure complete release of the brake.

In accordance with the present invention, there is provided a disc brake calliper including a housing (12) formed with a cylinder (14), a piston (16) for moving a brake pad (18) into pressure contact with a brake disc (22) and a device for positively retracting the brake pad (18) from the disc (22) to reduce brake drag when the brake is released, characterised in that the device for retracting the brake pad comprises a reaction member (34) comprising an annular element retained within an annular recess formed in the piston (16) and having limited axial movement relative to the piston (16), the limited axial movement being equal to the required predetermined retraction distance (X) of the piston (16), means (36) on the reaction member (34) for frictionally engaging the inner surface of the cylinder (14), and a retraction spring (38) acting between the reaction member (34) and the piston (16) to retract the piston (16) upon release of the brake, the force exerted by the retraction spring (38) being insufficient to overcome the friction between said means (36) and the inner surface of the cylinder (14), but being sufficient to overcome the frictional forces affecting the movement of the piston (16) so that when the brakes are released, the retraction spring (38) moves the piston (16) back from the disc (22) by said distance (X).

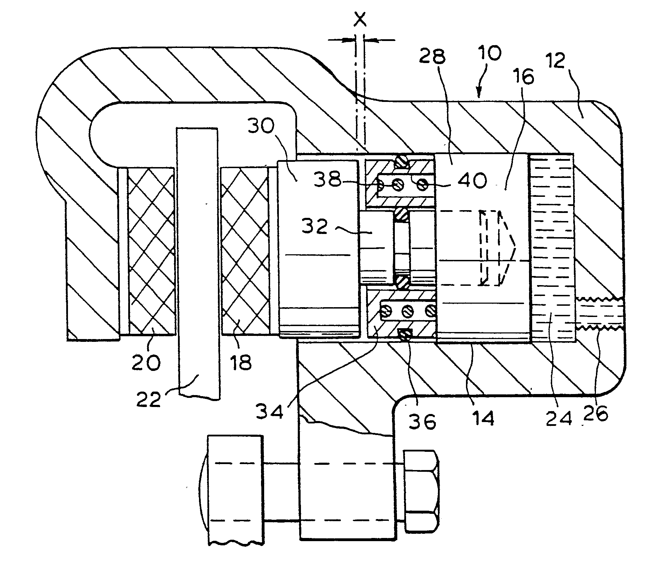

The invention will now be described further, by way of example, with reference to the accompanying drawing which is a fragmentary cross-section along the axis of the cylinder in a brake calliper embodying the invention.

A disc brake calliper 10 comprises a housing 12 formed with a cylinder 14. A piston 16 is arranged to urge brake pads 18 and 20 into pressure contact with opposite faces of a brake disc 22 when hydraulic fluid 24 is forced through inlet 26 into the cylinder 14 by a conventional brake pedal and master cylinder arrangement (not shown).

The piston 16 comprises an inner element 28 and an outer element 30 joined by a spigot element 32.

An annular reaction member 34 is positioned in the annular space between the inner and outer piston elements 28 and 30 and has an axial length which is less than the spacing between the inner and outer element by a distance X equal to the required predetermined retraction distance of the piston. The connection between the piston 16 and the reaction member 34 is therefore a lost motion connection allowing a predetermined distance X of movement of the piston relative to the reaction member 34.

An "O" ring friction element 36 is received in a groove in the outer surface of the reaction member and frictionally engages the inner surface of the cylinder 14.

A coil shaped retraction spring 38 is located in a recess 40 in the reaction member 34 open towards the inner piston element 28 so that the retraction spring urges the reaction member 34 and the inner piston element 28 apart.

The force exerted by the spring 38 on the reaction member 34 is insufficient to overcome the friction between the "O" ring 36 and the cylinder 14 but is sufficient to overcome the frictional forces affecting the piston 16 and the hydraulic actuating system.

In operation, after the brakes are released the retraction spring 38 moves the piston 16 back from the disc 22 until the outer piston element 30 contacts the reaction member 34. The distance by which the piston 16 is moved is equal to X, the

3  **0 140 549**  4

free movement of the reaction member relative to piston 16.

As the brake pads wear the reaction member 34 is moved along the cylinder 14 by contact with the inner piston element 28 upon successive applications of the brakes.

Alternatively, the reaction member and retraction spring may be formed by a plate spring device in friction contact with the cylinder 14.

## Claims

1. A disc brake calliper including a housing (12) formed with a cylinder (14), a piston (16) for moving a brake pad (18) into pressure contact with a brake disc (22) and a device for positively retracting the brake pad (18) from the disc (22) to reduce brake drag when the brake is released, characterised in that the device for retracting the brake pad comprises a reaction member (34) comprising an annular element retained within an annular recess formed in the piston (16) and having limited axial movement relative to the piston (16), the limited axial movement being equal to the required predetermined retraction distance (X) of the piston (16), means (36) on the reaction member (34) for frictionally engaging the inner surface of the cylinder (14), and a retraction spring (38) acting between the reaction member (34) and the piston (16) to retract the piston (16) upon release of the brake, the force exerted by the retraction spring (38) being insufficient to overcome the friction between said means (36) and the inner surface of the cylinder (14), but being sufficient to overcome the frictional forces affecting the movement of the piston (16) so that when the brakes are released, the retraction spring (38) moves the piston (16) back from the disc (22) by said distance (X).

2. A disc brake calliper as claimed in Claim 1, in which the annular element (34) is formed with a recess for receiving the retraction spring.

3. A disc brake calliper as claimed in Claim 1 or 2, wherein the means for frictionally engaging the cylinder (12) is an "O" ring (36) mounted in the outer surface of the reaction member (34).

## Patentansprüche

1. Ein Scheibenbremssattel, umfassend ein mit einem Zylinder (14) ausgebildetes Gehäuse (12), einen Kolben (16), um einen Bremsbelag (18) in Druckkontakt mit einer Bremsscheibe (22) zu bringen, und eine Vorrichtung, mit deren Hilfe der Bremsbelag (18) kraftwirksam von der Scheibe (22) zurückgeholt werden kann, um den Bremswiderstand bei Freigabe der Bremse zu verringern, dadurch gekennzeichnet, daß die Vorrichtung, mit der der Bremsbelag zurückgeholt werden kann, ein Reaktionselement (34) mit einem ringförmigen Element umfaßt, das innerhalb eines ringförmigen Rücksprungs im Kolben (16) gehalten wird und eine begrenzte Axialbewegung im Verhältnis zum Kolben (16) ausführen kann, wobei die begrenzte Axialbewegung der erforderlichen, festgelegten Rückholdistanz (X) des Kolbens (16) entspricht, eine Vorrichtung (36) am Reaktionselement (34), um einen Reibungseingriff mit der Innenfläche des Zylinders (14) sicherzustellen, sowie eine Rückholfeder (38), die zwischen dem Reaktionselement (34) und dem Kolben (16) wirksam ist, um den Kolben (16) bei Freigabe der Bremse zurückzuholen, wobei die von der Rückholfeder (38) ausgeübte Kraft nicht ausreicht, um die zwischen der genannten Vorrichtung (36) und der Innenfläche des Zylinders (14) bestehende Reibung zu überwinden, jedoch ausreichend groß ist, um die auf die Bewegung des Kolbens (16) einwirkenden Reibungskräfte zu überwinden, so daß, wenn die Bremsen freigegeben werden, die Rückholfeder (38) den Kolben (16) um die genannte Distanz (X) von der Scheibe (22) zurückholt.

2. Ein Scheibenbremssattel gemäß Anspruch 1, wobei das ringförmige Element (34) mit einem Rücksprung zur Aufnahme der Rückholfeder ausgebildet ist.

3. Ein Scheibenbremssattel gemäß Anspruch 1 oder 2, wobei es sich bei der Vorrichtung zur Erzielung eines Reibungseingriffs mit dem Zylinder (12) um einen "O"-Ring (36) handelt, der in der Außenfläche des Reaktionselements (34) vorgesehen ist.

## Revendications

1. Etrier de frein à disque coprenant un boîtier (12) formé avec un cylindre (14), un piston (16) pour solliciter une plaquette de frein (18) en contact sous pression contre un disque de frein (22) et un dispositif pour rappeler de manière effective la plaquette de frein (18) et l'éloigner du disque (22) pour réduire la résistance du frein lorsque le frein est desserré, caractérisé en ce que le dispositif pour éloigner la plaquette de frein comprend un organe de réaction (34) comprenant un élément annulaire ratenu dans un évidement annulaire ménagé dans le piston (16) et ayant un mouvement axial limité par rapport au piston (16), le mouvement axial limité étant égal à la distance de rappel (X) prédéterminée nécessaire du piston (16), un dispositif (36) sur l'organe de réaction (34) pour entrer en contact à frottement avec la surface intérieure du cylindre (14), et un ressort de rappel (38) agissant entre l'organe de réaction (34) et le piston (16) pour éloigner le piston (16) lorsque le frein est desserré, la force exercée par le ressort de rappel (38) étant insuffisante pour surmonter le frottement entre le dispositif (36) et la surface intérieure du cylindre (14, mais étant suffisante pour surmonter les forces de frottement affectant le mouvement du piston (16) de façon que, lorsque les freins sont desserrés le ressort de rappel (38) éloigne le piston (16) du disque (22) de la distance (X).

2. Etrier de frein à disque selon la revendication 1, caractérisé en ce que l'organe annulaire (34) comporte un évidement pour recevoir le ressort de rappel.

3. Etrier de frein à disque selon les revendications 1 ou 2, caractérisé en ce que le dispositif qui entre en contact à frottement avec le cylindre (12) est un joint d'étanchéité annulaire (36) monté sur la surface extérieure de l'organe de réaction (34).

0 140 549

1